# EUROPÄISCHE PATENTSCHRIFT

(11) **EP 2 235 262 B1**
(45) Veröffentlichungstag und Bekanntmachung des Hinweises auf die Patenterteilung: **13.03.2013**
(21) Anmeldenummer: 08863716.0
(22) Anmeldetag: 04.12.2008
(51) Int. Cl.: E01B 25/24, F16B 7/04

(54) **VERBINDUNGSELEMENT FÜR LAUFSCHIENEN UND LAUFSCHIENENSYSTEM**
CONNECTION ELEMENT FOR RUNNING RAILS AND RUNNING RAIL SYSTEM
ÉLÉMENT DE RACCORDEMENT POUR RAILS, ET SYSTÈME DE RAILS CORRESPONDANT

(30) Priorität: 22.12.2007 DE 102007062466
(43) Veröffentlichungstag der Anmeldung: 06.10.2010
(60) Teilanmeldung: 10170907.9
(73) Patentinhaber: Conductix-Wampfler GmbH, 79576 Weil am Rhein-Märkt (DE)
(72) Erfinder: GRAMATTE, Georg, 79591 Eimeldingen (DE)
(74) Vertreter: Charrier, Rapp & Liebau
(86) Internationale Anmeldenummer: PCT/EP2008/066792
(87) Internationale Veröffentlichungsnummer: WO 2009/080460

(56) Entgegenhaltungen:
- DE-A1- 2 741 096
- DE-A1- 4 317 498
- GB-A- 956 036
- GB-A- 979 213
- US-A- 4 140 417
- US-A- 4 641 989

## Beschreibung

Die Erfindung betrifft ein Verbindungselement für Laufschienen einer Hängelaufbahn nach dem Oberbegriff des Anspruchs 1 sowie ein Laufschienensystem nach dem Oberbegriff des Anspruchs 14.

Ein derartiges Verbindungselement geht aus der DE 43 17 498 A1 hervor. Die dortigen Hängebahnlaufschienen bestehen im Wesentlichen aus einem U-Profil, dessen Schenkelenden unter Belassung eines mittigen Durchgangs die Laufflächen ausbildend gegeneinander abgewinkelt sind. Um zwei Laufschienen an Ihren Enden miteinander zu verbinden, wird ein Verbinder eingesetzt, der im Wesentlichen den gleichen Querschnitt hat wie die Laufschienen, diese allerdings umgreift. Eine feste, gegen unerwünschtes Herausziehen oder Auseinanderbewegen der verbundenen Laufschienen gesicherte Verbindung wir dadurch erreicht, dass die Enden der Laufschienen Bohrungen aufweisen, welche auf Bohrungen im Verbinder ausgerichtet werden. Durch die fluchtenden Bohrungen werden dann Maschinenschrauben eingeschraubt, die ein Verrutschen oder Herausziehen der Laufschienen verhindern. Zwar stellt diese Art der Verbindung eine sichere Verbindung dar, jedoch ist die Montage aufwendig. So müssen die Bohrungen in den Laufschienen fluchtend auf die Bohrungen in dem Verbinder ausgerichtet und anschließend die Maschinenschrauben mit einem Werkzeug eingeschraubt werden. Zwar können die Schrauben bereits bei der Fertigung der Verbinder voreingeschraubt werden, jedoch besteht dann beim Transport der Verbinder die Gefahr, dass durch Schläge auf die herausstehenden Schrauben diese herausfallen oder die Gewinde der Schrauben oder der Bohrungen beschädigt werden. Auch muss stets ein Werkzeug zum Anziehen der Schrauben mitgeführt werden.

Es gibt ebenfalls die Möglichkeit, dass der Verbinder über Maschinenschrauben verfügt, welche blind auf die C-Schiene geschraubt und gekontert werden. D. h. die Schien verfügt in diesem Fall nicht über Bohrungen, in welche die Schrauben des Verbinders greifen. Die C-Schienen werden hierbei ausschließlich geklemmt. Nachteil hierbei ist, dass bei zu festem Anziehen der Schrauben sich die Schenkel der C-Schiene zu stark nach innen biegen und somit der Laufraum für den darin geführten Wagen zu klein wird und der Wagen darin klemmen kann. Bei ungenügendem Anziehen der Schrauben kann sich die Verbindung im Betrieb lösen. Auch hier sind Werkzeuge nötige, um die Verbindung herzustellen.

Um ein werkzeugloses Verbinden von Laufschienen zu ermöglichen, sieht die WO 2007/068897 A1 einen alternativen Verbinder und ein alternatives Laufschienensystem vor. Dort weisen die Enden der Laufschienen in Längsrichtung eine Erhöhung auf, die kurz vor ihren Enden durch eine Ausnehmung unterbrochen sind. Die Laufschienen werden dann in einen Verbinder, der einen entsprechenden Querschnitt hat, eingeschoben. Im Verbinder sind dann zu den Ausnehmungen korrespondierende Schlitze vorgesehen, durch welche zwei Verbindungslaschen eines Steckelements durchgesteckt werden könne, um die Verbindung herzustellen. Dieses Steckelement weist eine im Wesentlichen an die Form des Verbinders angepasste federnde Lasche auf, welche auf der Außenseite des Verbinders zu liegen kommt. Wenn das Steckelement vollständig in den Verbinder und durch die Ausnehmungen in den Laufschienen eingesteckt ist, schnappt die federnde Lasche des Steckelements in die Außenkontur des Verbinders ein, um es gegen ein Herausfallen zu sichern. Dies ermöglicht zwar ein werkzeugloses Zusammenbauen eines Laufschienensystems, weist aber den Nachteil auf, dass zusätzlich zum Verbinder ein weiteres Steckelement notwendig ist, welches möglichst genau an die Form des Verbinders angepasst sein muss. Darüber hinaus müssen die Ausnehmungen in den Laufschienen bei der Montage des Laufschienensystems genau in Übereinstimmung mit den Schlitzen des Verbinders gebracht werden, damit die Laschen des Steckelements sowohl durch die Schlitze des Verbinders als auch durch die Ausnehmungen in den Laufschienen gesteckt werden können.

Die WO 2005/089691 betrifft eine Verschlusskopplung für zwei Schienen einer Hängeschienenbahnen. Hierzu sind an den Enden zweier Schienen erste bzw. zweite Kopplungsteile vorgesehen, die zum miteinander Verkoppeln vorgesehen sind, wenn die beiden Schienen aufeinander ausgerichtet sind. Jedes der Kopplungsteile weist ein drehgelenkiges Verschlussstück, und das erste Kupplungsteil weist ein Verschlussbolzenteil mit einem abgeschrägten Ende auf, welches mit einem aus dem Verschlussstück des zweiten Kupplungsteils herausstehenden Stift in Eingriff gelangen kann, wobei das Verschlussbolzenteil eingerichtet ist, um in eine Ausnehmung des Verschlussstücks einzugreifen, wobei beide Verschlussstücke durch Verschieben des Verschlussbolzenteils aktiviert werden. Nachteilig ist dort, dass die sichere, feste und wieder lösbare Verbindung zweier Schienen nur mit einer komplizierten, teuren und aufwendigen Verschlusskupplung ermöglicht wird.

Die DE 27 41 096 A1 betrifft eine Schienenanlage, insbesondere für zweispurige Hängebahnfahrzeuge zur Personenbeförderung, im wesentlichen bestehend aus kastenförmigen, in ihrer Längserstreckung mit Dehnfugen angeordneten Fahrbahnträgern mit Laufbahnen für Tragräder bzw. Führungsrollen eines innerhalb dieser Träger betriebenen Fahrwerkes, wobei die Fahrbahnträger mit einem Schlitz zum Durchtritt von das Fahrwerk mit der Kabine verbindenden Aufhängungen versehen sind. Um die zwischen den Fahrbahnträgern angeordnete Dehnfugen in möglichst einfacher und räumlich gedrängter Weise zu überbrücken, wobei die Überbrückung Längenänderungen der Träger selbsttätig und stufenlos ausgleichen soll, wird dort die Dehnfuge zwischen zwei Fahrbahnträgern im Bereich der Laufbahnen für die Tragräder bzw. Führungsrollen durch ein jeweils in diese Laufbahnen eingesetztes dreieckförmiges Füllstück überbrückt ist, das mit seinen Schrägflächen gegen korrespondierende, an den Fahrbahnträgern gebildete Schrägflächen unter der Kraft einer Feder liegt.

Die DE 33 43 075 C2 betrifft eine Schienenhängebahn, insbesondere eine Einschienenhängebahn, bestehend aus einer aufhängbaren Profillaufschiene mit Hängebefestigungsmitteln und Laufwagen, bei der die Profillaufschiene aus einem länglichen Hohlkörper und einem durch gehenden Längsschlitz zum Aufnehmen der Hängebefestigungsmittel besteht. Das Hängebefestigungsmittel besteht aus einer Metallasche mit einer Einführspitze mit nachfolgend sich anschliessenden, aus der Laschenebene seitlich herausragenden Widerhaken, die beide innerhalb eines T-förmigen länglichen, als Profillaufschiene dienenden Hohlkörpers angeordnet sind, wobei die Widerhaken Stege hintergreifen, die seitlich eines durchgehenden Längsschlitzes in der Abschlussseite des T-Schaftes der Profillaufschiene angeordnet sind. Die Montage der Profillaufschiene an den deckenseitig bereits befestigten Hängebefestigungsmitteln erfolgt lediglich durch Einführen der Einführspitze des Hängebefestigungsmittels in den Längsschlitz der Profillaufschiene und weiteres Nachobendrücken der Profillaufschiene, bei dem die beiden Seitenflächen des T-Schaftes sich nach außen neigen, über die Außenflächen der Widerhaken gleiten und nachfolgend wieder zusammenschnappen können, so dass die Stege die Widerhaken hintergreifen. Dort ist es nicht möglich, die Einführspitze einfach wieder aus dem Längsschlitz der Profillaufschiene herauszunehmen.

Die GB 956 036 A betrifft ein Verbindungselement für Stangen mit schräg in die Einschubrichtungen der beiden Stangen ragende Zungen, die in Ausnehmungen in den Stangen eingreifen.

Auch die GB 979 213 A offenbart ein zweiteiliges Verbindungselement, bei dem Zungen in vorgegebene Ausnehmungen von U-förmigen Verbindungsschienen eingreifen. Um eine sichere Verbindung herzustellen, müssen die beiden einander gegenüberliegenden Teile des Verbindungselements mittels einer durch die U-förmigen Verbindungsschienen reichenden Flügelkopfschraube fest an die U-förmigen Verbindungsschienen angepresst werden. Dieses Verbindungselement weist den Nachteil auf, dass die durch den Hohlraum der U-förmigen Verbindungsschienen reichende Flügelschraube den Einsatz dieses Verbindungselements für Laufschienen einer Hängelaufbahn unmöglich macht, da durch die Laufschienen die Rollen der Hängelaufbahn laufen können müssen. Im übrigen weist diese Verbindungselement die gleichen Nachteile auf wie das der GB 956 036 A.

Aufgabe der Erfindung ist es deshalb, ein eingangs genanntes Verbindungselement bzw. Laufschienensystem bereitzustellen, welche die oben genannten Nachteile überwinden und insbesondere eine einfache und schnelle werkzeuglose Montage bei gleichzeitig sicherer Verbindung von Laufschienen des Laufschienensystems zu ermöglichen.

Die Erfindung löst diese Aufgabe durch ein Verbindungselement mit den Merkmalen des Anspruchs 1 sowie ein Laufschienensystem mit den Merkmalen des Anspruchs 14. Vorteilhafte Weiterbildungen und Ausgestaltungen der Erfindung sind in den Unteransprüchen angegeben.

Die Erfindung sieht vor, dass die Sicherungsvorrichtung des eingangs genannten Verbindungselements mindestens eine federelastische, in entspanntem Zustand schräg in eine Einschubrichtung einer ersten Laufschiene in den Hohlraum ragende erste Verbindungskralle aufweist, wobei die mindestens eine Verbindungskralle ausgebildet ist, um beim Einschieben der Laufschiene durch diese aus ihrem entspannten Zustand aus dem Hohlraum herausgedrückt zu werden und sich beim Herausziehen der ersten Laufschiene rückfedernd in diese einzugraben. Hierdurch wird vorteilhaft eine sichere Verbindung der Laufschiene mit dem Verbindungselement hergestellt, ohne zusätzliche lose Bauteile oder Werkzeug zu benötigen, da die Verbindung ausschließlich durch das Verbindungselement selbst hergestellt werden kann. Gleichzeitig wird hierdurch eine schnelle und einfache Montage des Laufschienensystems ermöglicht.

Das Eingraben erfolgt beim Herausziehen dadurch, dass sich die Verbindungskralle federnd an die eingeschobene Laufschiene legt und beim Herausziehen gegen ihre Schrägstellung gezogen wird. Je stärker gezogen wird, desto stärker legt sich die Verbindungskralle an die Laufschiene an und desto stärker gräbt sie sich in diese ein. Allerdings kann die Laufschiene ab einer bestimmten Zugkraft wieder aus dem Verbindungselement herausgezogen werden. Diese Zugkraft ist so bemessen, dass bei normalem Einsatz ein Herausziehen der Laufschiene nicht möglich ist.

Vorteilhaft sieht eine Ausführung der Erfindung vor, dass die Verbindungskralle eine in Einschubrichtung schräg in den Hohlraum nach innen ragende federelastische Zunge aufweist. Die federelastische Zunge stellt sicher, dass sich die Verbindungskralle beim Einschieben der Laufschiene aus dem Hohlraum wegdrücken lässt und andererseits unter Vorspannung an die eingeschobene Laufschiene anlegt.

Um eine sichere Verbindung zwischen Verbindungselement und Laufschiene zu gewährleisten, kann ein in den Hohlraum ragendes vorderes Ende der Verbindungskralle als Mittel zum Eingraben in die Laufschiene ausgebildet sein, wobei es in fertigungstechnisch vorteilhaften Ausführungen als Schneidkante oder Spitze ausgebildet sein kann. Um ein verbessertes Eingraben des Mittels zum Eingraben in die Laufschiene beim Herausziehen der Laufschiene zu gewährleisten, kann das Mittel zum Eingraben in Richtung der in den Hohlraum einzuschiebenden Laufschiene abgewinkelt sein.

Um zwei Laufschienen einfach und schnell zu verbinden, kann in einer vorteilhaften Ausführung der Erfindung eine zweite, der ersten Verbindungskralle entsprechende zweite federelastische Verbindungskralle vorgesehen sein, welche in entspanntem Zustand schräg in die Einschubrichtung der zweiten Laufschiene in den Hohlraum ragt. Insbesondere bei einem Verbindungselement, bei dem die Laufschienen von einander diametral entgegen gesetzten Einschubrichtungen eingeschoben werden, ist dies vorteilhaft.

Um das Einschieben und somit die Montage des Laufschienensystems zu vereinfachen, kann vorteilhaft am Verbindungselement eine federelastische erste Einschubbegrenzungslasche vorgesehen werden, welche zur Begrenzung des Einschiebens der ersten Laufschiene in deren Einschubrichtung in den für sie vorgesehenen Hohlraum am Verbindungselement angeordnet ist und in den für die zweite Laufschiene vorgesehenen anderen Hohlraum ragt. Bevorzugt kann die Einschubbegrenzungslasche eine Anschlagkante aufweisen, die in einer senkrecht zur Einschubrichtung der ersten Laufschiene verlaufenden Ebene verläuft.

Die erste Einschubbegrenzungslasche kann vorteilhaft in entspanntem Zustand schräg in den für die zweite Laufschiene vorgesehenen Hohlraum ragen und ausgebildet sein, um beim Einschieben der zweiten Laufschiene durch diese aus dem Hohlraum weggedrückt zu werden. Insbesondere bei einer Ausführung mit diametral entgegengesetzten Einschubrichtungen ist es weiter vorteilhaft, wenn zur Begrenzung des Einschiebens der zweiten Laufschiene in deren Einschubrichtung in den Hohlraum am Verbindungselement eine federelastische zweite Einschubbegrenzungslasche vorgesehen ist, welche in entspanntem Zustand schräg in den für die erste Laufschiene vorgesehenen Hohlraum ragt und ausgebildet ist, um beim Einschieben der ersten Laufschiene in den Hohlraum durch diese aus dem Hohlraum weggedrückt zu werden. Bevorzugt ragen die Einschubbegrenzungslaschen schräg entgegen der Einschubrichtung der Laufschiene, für die sie den Anschlag bilden, in den Bereich des Hohlraums für die jeweils andere Laufschiene. Insbesondere bei einem Verbindungselement für zwei Laufschienen mit diametral entgegengesetzten Einschubrichtungen drückt die zuerst eingeschobene Laufschiene dann beim Einschieben in den für sie vorgesehenen Bereich des Hohlraums die darin angeordnete Einschubgrenzungslasche aus diesem Bereich des Hohlraums weg, während die im für die andere, noch nicht eingeschobene Laufschiene vorgesehenen Bereich des Hohlraums angeordnete andere Einschubgrenzungslasche als Anschlag für die zuerst eingeschobene Laufschiene dient. Da gegebenenfalls die zuerst eingeschobene Laufschiene durch eine Verbindungskralle sicher im Verbindungselement gehalten wird, dient diese Laufschiene ihrerseits als Anschlag für die andere, nachträglich eingeschobene Laufschiene. Hierdurch lassen sich die Laufschienen mit ihren Enden Stoß an Stoß verbinden, ohne dass eine Unterbrechung zwischen ihnen bleibt. Hierdurch ergibt sich eine gute Laufruhe für die in den Laufschienen geführten Fahrzeuge.

In einer vorteilhaften Ausführung können die Verbindungskrallen und/oder die Einschubbegrenzungslaschen einstückig aus dem Verbindungselement geformt, insbesondere gestanzt oder geschnitten sein. Hierdurch kann eine schnelle und einfache Fertigung wie auch eine einfache Montage erreicht werden. Sind die Verbindungskrallen und/oder das Mittel zum Eingraben gehärtet, so kann insbesondere bei einem einstückigen Verbindungselement für das Verbindungselement das gleiche oder nur geringfügig härtere Material verwendet werden wie für die Laufschienen, ohne das die sichere Verbindung beeinträchtigt wird.

In einer alternativen, ebenfalls fertigungstechnisch vorteilhaften Ausführung kann vorgesehen werden, dass das Verbindungselement einen Verbindungskörper aufweist, in den ein Federblech mit daran angeformten Verbindungskrallen und/oder Einschubbegrenzungslaschen eingesetzt ist. Hierdurch können die Verbindungskrallen und/oder Einschubbegrenzungslaschen einfach aus einem gegenüber den Laufschienen härteren Material gefertigt werden, beispielsweise Federstahl, während der Verbindungskörper aus einem anderen, leichter zu bearbeitenden Material gefertigt werden kann.

Um das Federblech einfach und dennoch fest mit dem Verbindungskörper verbinden zu können, weist es Fixierungslaschen auf, welche in korrespondierende Ausnehmungen des Verbindungskörpers eingreifen. Besonders vorteilhaft können ein Teil der Verbindungslaschen als Schnappverbindungen ausgebildet sein, welche das Federblech sicher am Verbindungskörper halten, während andere Fixierungslaschen in Form von Anschlägen ausgebildet sind, die ein Verschieben des Federblechs beim Einstecken der Laufschienen in Einschubrichtung verhindern.

Werden bei einem eingangs genannten Laufschienensystem erfindungsgemäße Verbindungselemente verwendet, so ermöglicht sich vorteilhaft eine besonders schnelle und einfache Montage ohne Zusatzteile oder Werkzeuge. Vorteilhaft bestehen die Laufschienen aus einem gegenüber den Verbindungskrallen weichen Material, beispielsweise einem Stahl mit einer Zugfestigkeit von bis zu 400 N/mm². Das Material der Verbindungskrallen hingegen ist vorteilhaft mindestens doppelt so hart wie das der Laufschienen und weist beispielsweise eine Zugfestigkeit von 1700 N/mm² auf, insbesondere bei Verbindungselementen mit Verbindungskörper und eingelegtem Federblech. Bei einstückigem Verbindungselement kann für die Laufschienen vorteilhaft das gleiche oder ein nur geringfügig weicheres Material verwendet werden wie für das Verbindungselement, insbesondere wenn die Verbindungskrallen oder das Mittel zum Eingraben gehärtet sind.

Die Erfindung wird nun anhand von Ausführungsbeispielen mit Bezug auf die begleitenden Zeichnungen beschrieben. Diese zeigen:
- **Fig. 1**: ein aus zwei Laufschienen und einem Verbindungselement bestehendes Laufschienensystem in auseinander gebautem Zustand;
- **Fig. 2**: das Laufschienensystem aus Fig. 1 in zusammengebautem Zustand;
- **Fig.3**: eine dreidimensionale Ansicht eines erfindungsgemäßen Verbindungselements gemäß einer ersten Ausführung der Erfindung;
- **Fig. 4**: einen mittigen Längsschnitt durch das Verbindungselement aus Fig. 3;
- **Fig. 5**: eine dreidimensionale Ansicht eines Federblechs des Verbindungselements aus Fig. 3;
- **Fig. 6**: einen mittigen Längsschnitt durch das Federblech aus Fig. 5;
- **Fig. 7**: eine Detailansicht des Federblechs aus Fig. 6;
- **Fig. 8**: einen mittigen Längsschnitt durch das Verbindungselement aus Fig. 3 mit eingesteckten Laufschienen;
- **Fig. 9**: eine Detailansicht des Verbindungselements aus Fig. 8;
- **Fig. 10**: eine Detailansicht des Verbindungselements aus Fig. 9 im Querschnitt;
- **Fig. 11**: eine alternative dreidimensionale Ansicht des Verbindungselements aus Fig. 8.
- **Fig. 12**: eine dreidimensionale Ansicht eines Verbindungselements gemäß einer weiteren Ausführung der Erfindung;
- **Fig. 13**: eine Detailansicht von Verbindungskrallen des Verbindungselements aus Fig. 12;
- **Fig. 14**: eine Detailansicht von Einschubbegrenzungslaschen des Verbindungselements aus Fig. 12;
- **Fig. 15**: eine alternative Ausführung der Verbindungskrallen bei dem Verbindungselement aus Fig. 12;
- **Fig. 16**: die Ansicht aus Fig. 15 in anderer Perspektive.

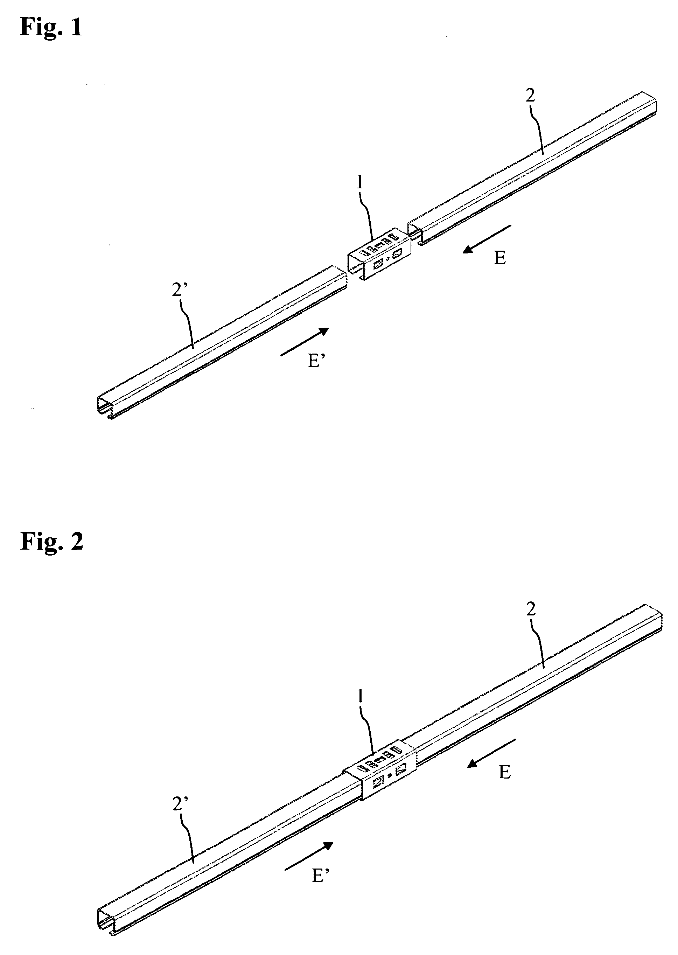

Das in Fig. 1 exemplarisch dargestellte Laufschienensystem weist ein Verbindungselement 1 auf, in welches zwei Laufschienen 2, 2' aus einander diametral entgegen gesetzten Einschubrichtungen E, E' eingeschoben werden können. Den verbundenen Zustand zeigt Fig. 2. Da das Verbindungselement 1 wie auch die Laufschienen 2 bzw. 2' im Wesentlichen symmetrisch ausgebildet sind, weisen sich entsprechende Teile gleiche Bezugsziffern auf, wobei die Teile auf der in den Zeichnungen linken Seite, ausgehend von der Mitte des Verbindungselements 1, jeweils durch einen Apostroph gekennzeichnet sind.

Sowohl das Verbindungselement 1 als auch die Laufschienen 2, 2' bestehen aus einem im Wesentlichen länglichen Stahl-Hohlprofil, dessen eine Seite in Längsrichtung unterbrochen ist. Derartige Laufschienen 2, 2' werden auch als C-Schienen bezeichnet. Die Unterbrechung dient zur Aufnahme von Laufrädern von an den Laufschienen 2, 2' hängenden Laufbahnfahrzeugen. Wie insbesondere in Fig. 2 zu erkennen, umgreift das Verbindungselement 1 im zusammengebauten Zustand des Laufschienensystems die in einen Hohlraum H, H' des Verbindungselements eingeschobenen Laufschienen 2 und 2'.

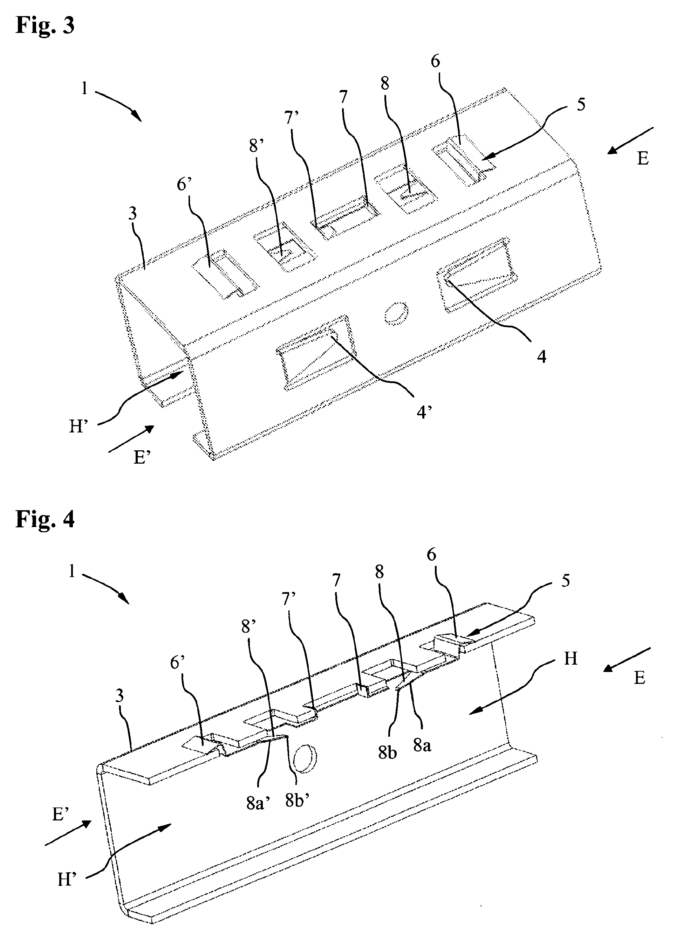

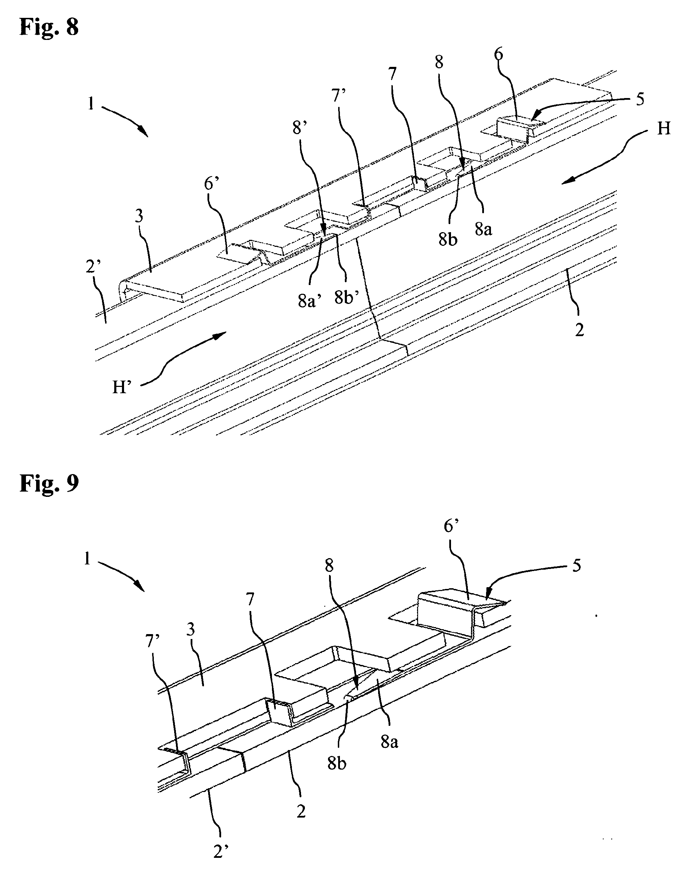

Wie besonders gut in Fig. 4 und Fig. 8 zu erkennen, kann der Hohlraum H, H' des Verbindungselements 1 in einen Hohlraumbereich H für die erste Laufschiene 2 und ein Hohlraumbereich H' für die zweite Laufschiene 2' aufgeteilt werden. Die Grenze zwischen den Hohlraumbereichen H, H' verläuft im vorliegenden Ausführungsbeispiel bezüglich der Längsausrichtung des Verbindungselements 1 mittig. In alternativen Ausführungen können die Hohlraumbereiche H, H' aber auch unterschiedliche Größe aufweisen.

Das in den Figuren 3 und 4 im Detail dargestellte Verbindungselement 1 weist einen Verbindungskörper 3 auf, der an seinen in Fig. 3 senkrechten Seitenwänden Führungslaschen 4, 4' aufweist. Diese drücken im einsetzten Zustand der Laufschienen 2, 2' von beiden Seiten gegen die Laufschienen 2, 2' und zentrieren diese somit bezüglich der senkrechten Seitenwände des Verbindungselements 1. Auf seiner der unterbrochenen Seite gegenüberliegenden Seite weist der Verbindungskörper 3 mehrere Ausnehmungen auf, deren Funktion später beschrieben werden.

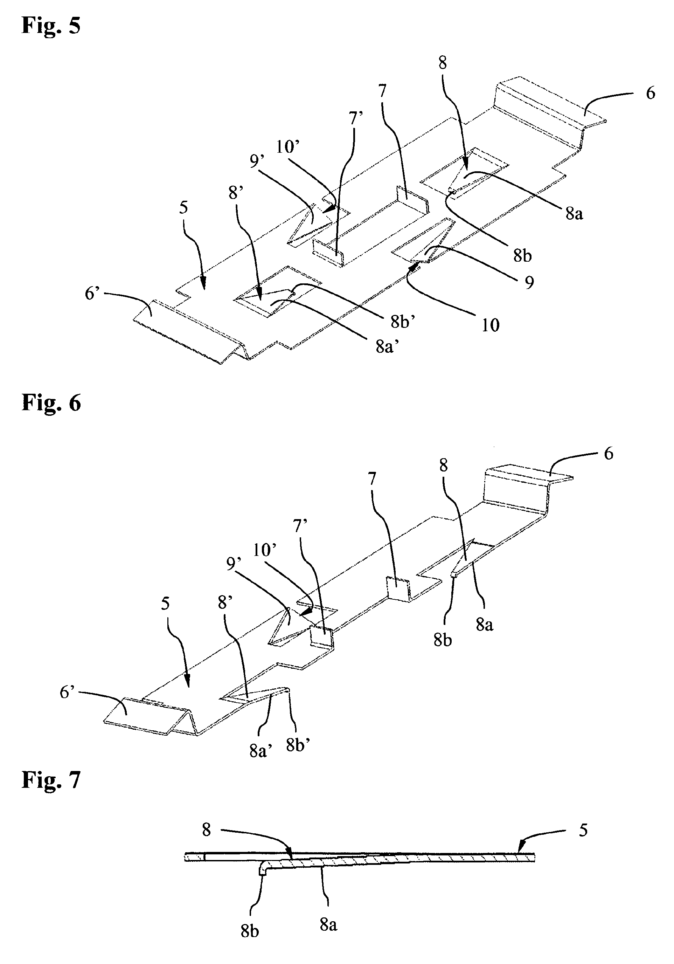

Auf der Innenseite der in Fig. 3 oberen Seite des Verbindungskörpers 3 ist ein Federblech 5 befestigt. Das Federblech 5, welches besonders gut in den Fig. 5 bis 7 zu erkennen ist, ist aus Federstahl mit einer Zugfestigkeit von 1700 N/mm² gefertigt, ist also wesentlich härter als die aus Stahl mit einer Zugfestigkeit von 400 N/mm² gefertigten Laufschienen. Das Federblech 5 weist an seinen Längsenden Fixierungslaschen 6, 6' auf, welche aufgrund der Federelastizität des Federblechs 5 schnappend in die äußeren Ausnehmungen auf der oberen Seite des Verbindungskörpers 3 eingeschnappt werden können und somit das Federblech 5 im Verbindungskörper 3 halten. Um ein Verschieben des Federblechs 5 in Längsrichtung des Verbindungskörpers 3 zu verhindern, greifen weitere Fixierungslaschen 7, 7' in die mittlere Ausnehmung auf der oberen Seite des Verbindungskörpers 3 und liegen dort direkt an deren stirnseitigen Kanten an. Die Fixierungslaschen 6, 6' und 7, 7' dienen somit zum sicheren Halten des Federblechs 5 im Verbindungskörper 3 und verhindern sowohl eine Bewegung in Längsrichtung des Verbindungskörpers 3 als auch quer zu dieser.

Um sicherzustellen, dass die vollständig in den Hohlraum H, H' eingeschobenen Laufschienen 2, 2' nicht mehr ohne weiteres aus dem Verbindungselement 1 herausgezogen werden können oder herausfallen, ist eine Sicherungsvorrichtung durch am Federblech angeordnete Verbindungskrallen 8, 8' gebildet. Die Verbindungskrallen 8, 8' ragen im eingesetzten Zustand des Federblechs 5 in den Grundkörper 3 in die jeweilige Einschubrichtung E, E' schräg nach unten in den Hohlraum H bzw. H'. Die Verbindungskrallen 8, 8' bestehen aus einer federelastischen Zunge 8a', welche an ihrem vorderen, in den Hohlraum H bzw. H' ragenden Ende jeweils eine Vorderkante 8b, 8b' aufweisen. Die Vorderkanten 8b, 8b' sind bei dem in Fig. 7 dargestellten entspannten Zustand im Wesentlichen senkrecht zur Längsachse des Verbindungskörpers 3 gerichtet.

Aufgrund der rückfedernde Eigenschaften der Verbindungskrallen 8, 8' können die Laufschienen 2, 2' ohne großen Widerstand in den jeweiligen Hohlraumbereich H bzw. H' eingeschoben werden. Während des Einschiebens werden dabei die Verbindungskrallen 8, 8' aus dem Hohlraum H bzw. H' nach oben zum Verbindungskörper 3 hin weggedrückt. Wird hingegen versucht, die Laufschienen 2, 2' wieder aus dem Verbindungselement 1 herauszuziehen, so werden die Vorderkanten 8b, 8b' durch die rückfedernde Wirkung der Zungen 8a, 8a' auf die ihnen zugewandten Oberflächen der Laufschienen 2, 2' gedrückt und graben sich aufgrund ihrer größeren Zugfestigkeit bzw. Härte in die Laufschienen 2 bzw. 2' ein. Je stärker die Laufschienen 2, 2' herausgezogen werden, desto stärker wirkt sich die Vorspannung der Verbindungskrallen 8, 8' und ihre Schrägstellung zum Hohlraum H, H' hin aus, die Vorderkanten 8b, 8b' graben sich also noch stärker in das Material der Laufschienen 2 bzw. 2' ein.

Erst ab einer vorbestimmten, hohen Zugkraft kann die Anpresskraft der Verbindungskrallen 8, 8' überwunden werden und die Laufschienen 2, 2' zu Demontage wieder aus dem Verbindungselement 1 herausgezogen werden. Um das Herausziehen weiter zu vereinfachen, sind im Verbindungskörper 3 zwei Ausnehmungen so angeordnet, dass durch sie hindurch die Vorderkanten 8b, 8b' der Verbindungskrallen 8, 8' sichtbar und von den Laufschienen 2, 2' abhebbar sind. Zudem ermöglichen diese Ausnehmungen im Verbindungskörper 3 eine Kontrolle, ob sich die Vorderkanten 8b, 8b' ausreichend in das Material der Laufschienen 2, 2' eingegraben haben. Dieser Zustand ist insbesondere auch in den Figuren 8 bis 10 gut zu erkennen, die das Verbindungselement 1 mit eingeschobenen Laufschienen 2, 2' zeigen.

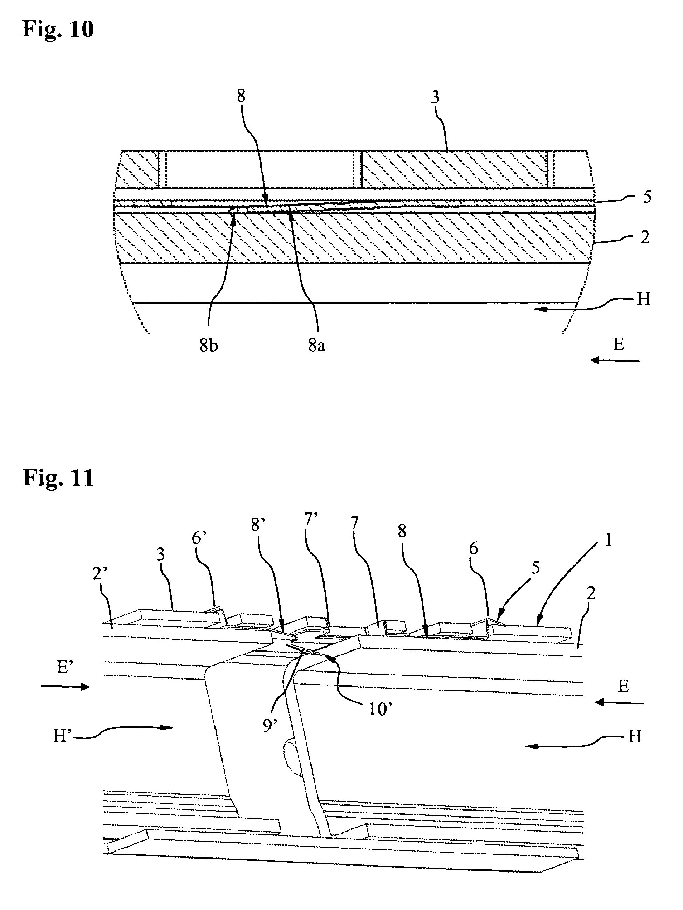

Um beim Einschieben der Laufschienen 2, 2' sicherzustellen, dass diese jeweils nur bis zur Mitte des Verbindungselements 1 eingeschoben werden können und somit nur in dem jeweiligen Bereich H bzw. H' des Hohlraums zu liegen kommen, sind am Federblech 5 Einschubbegrenzungslaschen 9, 9' vorgesehen. Die Einschubbegrenzungslaschen 9, 9' werden durch in den Hohlraumbereich H bzw. H' ragende Teile des Federblechs 5 gebildet, wobei jeweils eine Anschlagkante 10 bzw. 10' der Einschubbegrenzungslaschen 9, 9' als Anschlag für die Laufschienen 2, 2' dient. Die Anschlagkanten 10, 10' verlaufen dabei in einer Ebene quer zur Einschubrichtung E bzw. E', im der vorliegenden Ausführung also durch die zwischen den Hohlraumbereichen H und H' verlaufende Mittelebene des Verbindungskörpers 3. Die Einschubbegrenzungslasche 9 und deren Anschlagkante 10 dient als Anschlag für die in den Bereich H' des Hohlraums von links eingeschobene Laufschiene 2', während die Einschubbegrenzungslasche 9' und deren Anschlagkante 10' als Anschlag für die in Fig. 11 von rechts in den Bereich H des Hohlraums eingeschobene Laufschiene 2 dient.

Wie besonders gut anhand von Fig. 11 zu erkennen, wird zuerst die Laufschiene 2 von in Fig. 11 rechts in den Hohlraumbereich H geschoben, bis sie an der Anschlagkante 10' der Einschubbegrenzungslasche 9' anschlägt. Da die Verbindungskralle 8 dann in die Oberfläche der Laufschiene 2 eingreift, besteht keine Gefahr, dass die Laufschiene 2 aus Versehen wieder aus dem Verbindungselement 1 herausgezogen wird. Durch die Einschubbegrenzungslasche 9' wird zudem sichergestellt, dass die Laufschiene 2 nur bis zur Mitte, also ausschließlich in den Hohlraumbereich H des Verbindungselements 1 eingeschoben wird. Anschließend wird die Laufschiene 2' von Fig. 11 links in den Hohlraumbereich H' eingeschoben, wobei sie hierbei am Ende des Einschiebvorgangs die Einschubbegrenzungslasche 9' nach oben aus dem Hohlraumbereich H' zum Verbindungskörper 3 hin wegdrückt, was aufgrund der federelastischen Eigenschaften des Federblechs 5 ohne weiteres möglich ist. Als Anschlag für die Laufschiene 2' dient somit die bereits eingeschobene und durch die Federkralle 8 gesicherte Laufschiene 2. Die in Fig. 11 nicht sichtbare Einschubbegrenzungslasche 9 wird bereits beim Einschieben der ersten Laufschiene 2 von in Fig. 11 rechts aus dem Hohlraum H nach oben weggedrückt und ist bei dieser Reihenfolge des Einschiebens der Laufschienen 2, 2' ohne Wirkung. Um eine einfache Montage zu ermöglichen, werden jedoch für beide Einschubrichtungen E, E' Einschubbegrenzungslaschen 9 und 9' vorgesehen, wobei jeweils eine von ihnen je nach Reihenfolge des Einschiebens der Laufschienen 2, 2' ohne Wirkung bleibt.

Wir vorstehend ausgeführt, ermöglicht das erfindungsgemäße Verbindungselement ein besonders einfaches Montieren eines Laufschienensystems und stellt zudem eine sichere Verbindung her.

Durch das Federblech 5 könne auf einfache Weise mit geringem Materialverbrauch die notwenigen federelastischen Eigenschaften bei gleichzeitiger hoher Härte und Zugfestigkeit für die Verbindungskrallen vorgesehen werden, während der Verbindungskörper 3 in diesem Ausführungsbeispiel aus einem weicheren Material hergestellt werden kann, welches herstellungstechnisch einfacher zu bearbeiten ist.

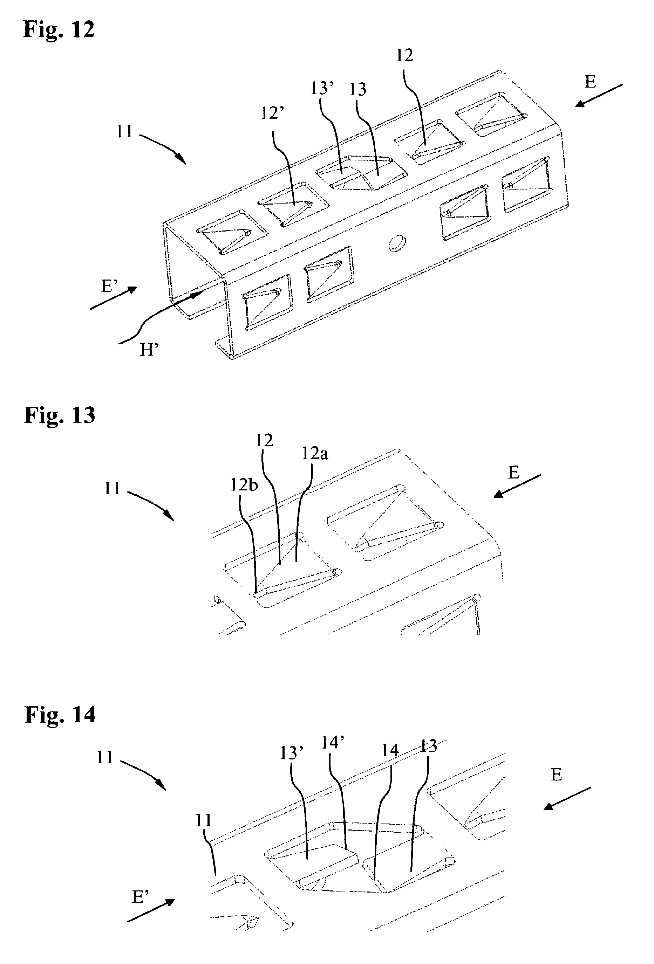

Ein weiteres erfindungsgemäßes Verbindungselement 11 zeigen die Fig. 12 bis 13. Dieses unterscheidet sich im wesentlichen dadurch von dem in den Fig. 1 bis 11 gezeigten Verbindungselement 1, dass es einstückig ausgebildet ist und andersartig ausgebildete Federkrallen und Einschubbegrenzungslaschen aufweist. Die grundsätzliche Funktionsweise des Verbindungselements, der Federkrallen und der Einschubbegrenzungslaschen entspricht aber der oben beschriebenen, so dass im nachfolgenden vor allem auf die Unterschiede eingegangen wird.

Im Gegensatz zum Verbindungselement 1 ist das Verbindungselement 11 einteilig aus einem Material gebildet. Um eine gute Verbindung zu gewährleisten, sind bei an den in Fig. 12 seitlichen und oberen Seiten des Verbindungselements 11 eine Vielzahl von Verbindungskrallen direkt aus dem Verbindungselement 11 geformt, wobei der Übersichtlichkeit halber nur die Verbindungskralle 12 beschrieben wird. Die Aussagen hierzu gelten aber in gleicher Weise auch für die anderen Verbindungskrallen des Verbindungselements 11. Durch das einteilige Material kann vorteilhaft die Herstellung weiter vereinfacht werden, da kein zusätzliches Federblech 5 benötigt wird.

Wie anhand der in Fig. 13 im Detail gezeigten Verbindungskralle 12 zu erkennen, ragt diese nach innen in den Hohlraum H des Verbindungselements 1. Eine nach innen ragende federelastische Zunge 12a des Verbindungselements 11 sorgt dafür, dass bei eingeschobener Laufschiene 2 eine leicht zur Laufschiene hin abgewinkelte Spitze 12b der Verbindungskralle 12 zur Anlage an der Laufschiene 2 gelangt. Beim Herausziehen der Laufschiene 2 drückt die Zunge 12a die Spitze 12b gegen die Laufschiene 2, so dass sich die Spitze 12b in die Laufschiene 2 eingräbt. Unter großem Kraftaufwand kann die Laufschiene 2 zwar herausgezogen werden, jedoch werden hierdurch Späne aus dem Material der Laufschiene 2 ausgeschnitten. Aufgrund der Form der Spitze 12b kann im vorliegenden Ausführungsbeispiel das Verbindungselement 11 aus dem gleichen Material gefertigt werden wie die Laufschiene 2, so dass keine unterschiedlich harten Materialien benötigt werden. Allerdings besteht dann der Nachteil, dass die Spitze 12b der Verbindungskralle 12 nach mehrmaligem Herausziehen der Laufschiene 2 abgenutzt ist. Dieser Nachteil kann dadurch überwunden werden, dass die Spitze 12b gehärtet ist, was bevorzugt durch induktives Härten erfolgt. Maßgeblich ist, dass die Spitze 12b härter ist als das Material der Laufschiene 2.

Ebenfalls aus dem Verbindungselement 11 geformte Einschubbegrenzungslaschen 13, 13' sind in Fig. 14 im Detail dargestellt. Diese funktionieren grundsätzlich wie die Einschubbegrenzungslaschen 9, 9' des oben beschriebenen ersten Ausführungsbeispiels. Auch die Einschubbegrenzungslaschen 13, 13' weisen als Anschläge für die jeweils andere Laufschiene 2' bzw. 2 ausgebildete, schräg in den Hohlraum H, H' ragende Anschlagkanten 14, 14' auf, welche dabei in einer Ebene quer zur Einschubrichtung E bzw. E' verlaufen. Die Anschlagkante 14 begrenzt hierbei wieder das Einschieben der Laufschiene 2' in den Hohlraumbereich H', während die Anschlagkante 14' das Einschieben der Laufschiene 2 in den Hohlraumbereich H begrenzt. Da die Einschubbegrenzungslaschen 13, 13' federelastisch in den jeweiligen Hohlraumbereich H, H' ragen, können sie beim Einschieben der Laufschiene 2, 2' aus diesem herausgedrückt werden, so dass die Laufschienen 2, 2' Stoß auf Stoß aneinander geschoben werden können. Hierbei dient dann die erste eingeschobene Laufschiene 2, welche an der Anschlagkante 14' der Einschubbegrenzungslasche 13' zuerst angeschlagen wurde, selbst als Anschlag für die nachfolgend eingeschobene zweite Laufschiene 2', wie bereits oben beim Verbindungselement 1 ausführlich beschrieben.

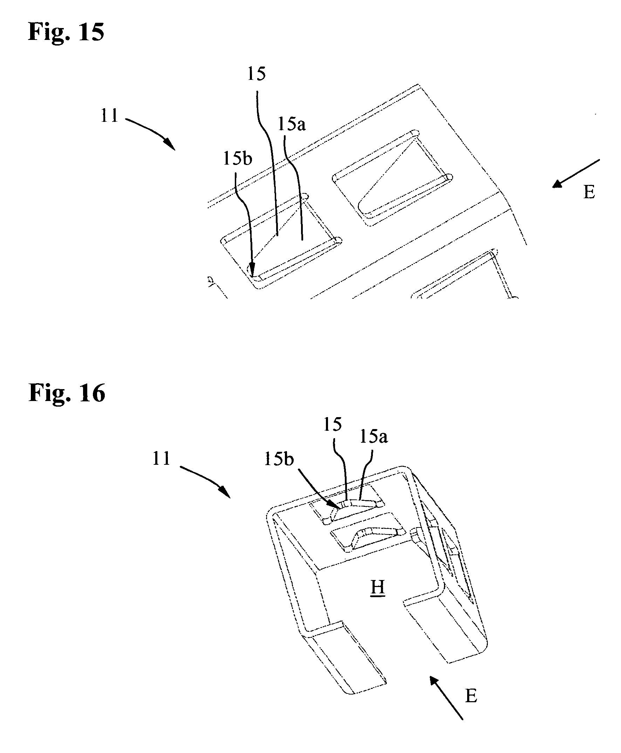

In Fig. 15 und 16 weist das Verbindungselement 11 alternativ ausgebildete Verbindungskrallen auf, welche exemplarisch anhand einer Verbindungskralle 15 beschrieben werden. Die Verbindungskralle 15 ist wie auch die Verbindungskralle 12 aus dem Verbindungselement 11 ausgeformt, weist jedoch keine abgewinkelte Spitze 13b auf. Vielmehr ist das Mittel zum Eingraben hier durch eine Schneidkante 15a gebildet, welches am vorderen Ende einer federelastisch in den Hohlraum H ragenden Zungen 15a sitzt. Da im vorliegenden Ausführungsbeispiel die Verbindungskralle 15 aus der Rohform des Verbindungselements 11 ausgestanzt wurde, weisen die durch das Stanzen hervorgerufenen Kanten der Verbindungskralle 15 einen sonst unerwünschten Stanzgrat auf. Dieser wird entgegen sonstiger Übung nicht entfernt, sondern stellt die scharfe Schneidkante 15b bereit, welche sich vorteilhaft beim Herausziehen einer Laufschiene 2 in diese einschneidet bzw. eingräbt. Ein derartiger Schneidgrat kann auch durch schneidende Herstellung der Verbindungskralle 15 erfolgen, beispielsweise durch Laserschneiden. Auch hier kann das Verbindungselement 11 aus dem gleichen oder einem etwas härteren Material wie die Laufschiene 2 gefertigt werden. Vorteilhaft kann die Schneidkante 15b auch gehärtet werden.

In alternativen Ausgestaltungen kann das Verbindungselement anstelle der hier gezeigten symmetrisch ausgebildeten Hälften auch unterschiedlich große Verbindungsbereiche für die Laufschienen aufweisen. Ebenso kann das Verbindungselement auch als Kopplungselement für unterschiedliche Verbindungssysteme ausgebildet sein. So kann es auf einer Seite mit herkömmlichen Verbindungselementen, z.B. Schrauben, ausgestattet sein, während es auf der anderen Seite die erfindungsgemäßen Verbindungskrallen aufweist.

## Patentansprüche

1. Verbindungselement (1; 11) zum Verbinden von zwei Laufschienen (2, 2') einer Hängelaufbahn mit einem Hohlraum (H, H') zur Aufnahme der Laufschienen (2, 2') und einer Sicherungsvorrichtung zum Sichern der Laufschienen (2, 2') gegen Herausziehen aus dem Hohlraum (H, H'), wobei die Sicherungsvorrichtung mindestens eine federelastische, in entspanntem Zustand schräg in eine Einschubrichtung (E) einer ersten Laufschiene (2) in den Hohlraum (H) ragende erste Verbindungskralle (8; 12; 15) aufweist, **dadurch gekennzeichnet, dass** die mindestens eine Verbindungskralle (8; 12; 15) ausgebildet ist, um beim Einschieben der Laufschiene (2) durch diese aus ihrem entspannten Zustand aus dem Hohlraum (H) herausgedrückt zu werden und sich beim Herausziehen der ersten Laufschiene (2) rückfedemd in diese einzugraben.

2. Verbindungselement (1; 11) nach Anspruch 1, **dadurch gekennzeichnet, dass** die Verbindungskralle (8; 12; 15) eine in Einschubrichtung (E) schräg in den Hohlraum (H) nach innen ragende federelastische Zunge (8a; 12a; 15a) aufweist.

3. Verbindungselement (1; 11) nach einem der voranstehenden Ansprüche, **dadurch gekennzeichnet, dass** ein in den Hohlraum (H) ragendes vorderes Ende der Verbindungskralle (8; 12; 15) als Mittel zum Eingraben (8b; 12b; 15b) in die Laufschiene (2) ausgebildet ist.

4. Verbindungselement (1; 11) nach Anspruch 3, **dadurch gekennzeichnet, dass** das Mittel zum Eingraben eine Schneidkante (8b; 15b) oder eine Spitze (12b) ist.

5. Verbindungselement (1; 11) nach Anspruch 4, **dadurch gekennzeichnet, dass** das Mittel zum Eingraben (8b; 12b) in Richtung der in den Hohlraum einzuschiebenden Laufschiene (2) abgewinkelt ist.

6. Verbindungselement (1; 11) nach einem der voranstehenden Ansprüche, **dadurch gekennzeichnet, dass** die Sicherungsvorrichtung eine federelastische, in entspanntem Zustand schräg in eine Einschubrichtung (E') einer zweiten Laufschiene (2') in den Hohlraum (H') ragende zweite Verbindungskralle (8'; 12'; 15') aufweist.

7. Verbindungselement (1; 11) nach einem der voranstehenden Ansprüche, **dadurch gekennzeichnet, dass** zur Begrenzung des Einschiebens der ersten Laufschiene (2) in deren Einschubrichtung (E) in den für sie vorgesehenen Hohlraum (H) eine am Verbindungselement (1; 11) angeordnete und in den für die zweite Laufschiene (2') vorgesehenen anderen Hohlraum (H') ragende federelastische erste Einschubbegrenzungslasche (9'; 13') vorgesehen ist.

8. Verbindungselement (1; 11) nach Anspruch 7, **dadurch gekennzeichnet, dass** eine Anschlagkante (10'; 14') der ersten Einschubbegrenzungslasche (9'; 13') in einer senkrecht zur Einschubrichtung (E) der ersten Laufschiene (2) verlaufenden Ebene verläuft.

9. Verbindungselement (1; 11) nach Anspruch 7 oder 8, **dadurch gekennzeichnet, dass** die mindestens eine erste Einschubbegrenzungslasche (9'; 13') in entspanntem Zustand schräg in den für die zweite Laufschiene (2') vorgesehenen Hohlraum (H') ragt und ausgebildet ist, um beim Einschieben der zweiten Laufschiene (2') durch diese aus deren Hohlraum (H') weggedrückt zu werden.

10. Verbindungselement (1; 11) nach einem der Ansprüche 7 bis 9, **dadurch gekennzeichnet, dass** zur Begrenzung des Einschiebens der zweiten Laufschiene (2') in deren Einschubrichtung (E') in den für sie vorgesehenen Hohlraum (H') eine am Verbindungselement (1; 11) angeordnete federelastische zweite Einschubbegrenzungslasche (9; 13) vorgesehen ist, welche in entspanntem Zustand schräg in den für die erste Laufschiene (2) vorgesehenen Hohlraum (H) ragt und ausgebildet ist, um beim Einschieben der ersten Laufschiene (2) durch diese aus deren Hohlraum (H) weggedrückt zu werden.

11. Verbindungselement (1) nach einem der voranstehenden Ansprüche, **dadurch gekennzeichnet, dass** die Verbindungskrallen (8, 8') und/oder Einschubbegrenzungslaschen (9, 9') aus einem Federblech (5) geformt sind, welches in einem Verbindungskörper (3) des Verbindungselements (1) angeordnet ist.

12. Verbindungselement (1) nach Anspruch 11, **dadurch gekennzeichnet, dass** das Federblech (5) zum Fixieren am Verbindungskörper (3) Fixierungslaschen (6, 6', 7, 7') aufweist, welche in korrespondierende Ausnehmungen des Verbindungskörpers (3) eingreifen.

13. Verbindungselement (1; 11) nach einem der voranstehenden Ansprüche, **dadurch gekennzeichnet, dass** die Verbindungskrallen (8, 8'; 12, 12'; 15) und/oder die Einschubbegrenzungslaschen (9, 9'; 13, 13') und/oder die Fixierungslaschen (6, 6', 7, 7') und/oder das Federblech (5) aus einem gegenüber den Laufschienen (2, 2') härteren Material, insbesondere Federstahl, bestehen.

14. Laufschienensystem mit mehreren durch Verbindungselemente (1; 11) verbindbaren, aus länglichen Hohlprofilen, deren eine Seite in Längsrichtung unterbrochen ist, bestehenden Laufschienen (2, 2'), **dadurch gekennzeichnet, dass** die Verbindungselemente (1; 11) nach einem der voranstehenden Ansprüche ausgebildet sind.

15. Laufschienensystem nach Anspruch 14, **dadurch gekennzeichnet, dass** die Laufschienen (2, 2') aus einem gegenüber den Verbindungskrallen (8, 8'; 12, 12'; 15) des Verbindungselements (1; 11) weichen Material bestehen.

## Claims

1. Connection element (1; 11) for connection of two running rails (2, 2') of an overhead track with a cavity (H, H') for receiving the running rails (2, 2') and a locking device for preventing the running rails (2, 2') from being pulled out of the cavity (H, H'), wherein the locking device exhibits at least one springily elastic first connecting claw (8; 12; 15) which in the relaxed state extends obliquely in a direction of insertion (E) of a first running rail (2) into the cavity (H), **characterised in that** the at least one connecting claw (8; 12; 15) is designed to be pressed out of the cavity (H) out of its relaxed state by the running rail (2) when the running rail (2) is inserted and dig itself resiliently into the first running rail (2) when the first running rail (2) is pulled out.

2. Connection element (1; 11) according to claim 1, **characterised in that** the connecting claw (8; 12; 15) exhibits a springily elastic tongue (8a; 12a; 15a) which extends inwards obliquely into the cavity (H) in the direction of insertion (E).

3. Connection element (1; 11) according to one of the preceding claims, **characterised in that** a front end of the connecting claw (8; 12; 15) extending into the cavity (H) is embodied as a means (8b; 12b; 15b) for digging into the running rail (2).

4. Connection element (1; 11) according to claim 3, **characterised in that** the means for digging in is a cutting edge (8b; 15b) or a point (12b).

5. Connection element (1; 11) according to claim 4, **characterised in that** the means (8b; 12b) for digging in is angled in the direction of the running rail (2) to be inserted into the cavity.

6. Connection element (1; 11) according to one of the preceding claims, **characterised in that** the locking device exhibits a springily elastic second connecting claw (8'; 12'; 15') which in the relaxed state extends obliquely in a direction of insertion (E') of a second running rail (2') into the cavity (H').

7. Connection element (1; 11) according to one of the preceding claims, **characterised in that** to limit the insertion of the first running rail (2) in the direction of insertion (E) thereof into the cavity (H) provided for it, a springily elastic first insertion limiting tongue (9'; 13') is provided arranged on the connection element (1; 11) and extending into the other cavity (H') provided for the second running rail (2').

8. Connection element (1; 11) according to claim 7, **characterised in that** a stop edge (10'; 14') of the first insertion limiting tongue (9'; 13') runs in a plane running perpendicularly to the direction of insertion (E) of the first running rail (2).

9. Connection element (1; 11) according to claim 7 or 8, **characterised in that** in the relaxed state the at least one first insertion limiting tongue (9'; 13') extends obliquely into the cavity (H') provided for the second running rail (2') and is designed to be pressed away by the second running rail (2') out of the cavity (H') thereof when the second running rail (2') is inserted.

10. Connection element (1; 11) according to one of claims 7 to 9, **characterised in that** to limit the insertion of the second running rail (2') in the direction of insertion (E') thereof into the cavity (H') provided for it, a springily elastic second insertion limiting tongue (9; 13) is provided which is arranged on the connection element (1; 11) and in the relaxed state extends obliquely into the cavity (H) provided for the first running rail (2) and is designed to be pressed away by the first running rail (2) out of the cavity (H) thereof when the first running rail (2) is inserted.

11. Connection element (1) according to one of the preceding claims, **characterised in that** the connecting claws (8, 8') and/or insertion limiting tongues (9, 9') are formed from a spring plate (5) which is arranged in a connecting part (3) of the connection element (1).

12. Connection element (1) according to claim 11, **characterised in that** for fixture to the connecting part (3) the spring plate (5) has fixing tongues (6, 6', 7, 7') which engage in corresponding openings in the connecting part (3).

13. Connection element (1; 11) according to one of the preceding claims, **characterised in that** the connecting claws (8, 8'; 12, 12'; 15) and/or the insertion limiting tongues (9, 9'; 13, 13') and/or the fixing tongues (6, 6', 7, 7') and/or the spring plate (5) are made of a material which is harder than the running rails (2, 2'), in particular of spring steel.

14. Running rail system with a plurality of running rails (2, 2') which can be connected by connection elements (1; 11) and consist of elongated hollow profiles, one side of which is interrupted in the longitudinal direction, **characterised in that** the connection elements (1; 11) are embodied according to one of the preceding claims.

15. Running rail system according to claim 14, **characterised in that** the running rails (2, 2') are made of a material which is soft compared to the connecting claws (8, 8'; 12, 12'; 15) of the connection element (1; 11).

## Revendications

1. Elément de raccordement (1 ; 11) pour le raccordement de deux rails de roulement (2, 2') d'une voie de roulement suspendue avec un espace creux (H, H') pour recevoir les rails de roulement (2, 2') et un dispositif de retenue pour bloquer les rails de roulement (2, 2') contre tout retrait de l'espace creux (H, H'), le dispositif de retenue présentant au moins une première griffe de raccordement (8 ; 12 ; 15) élastique, pénétrant dans un état détendu en biais dans un sens d'enfichage (E) d'un premier rail de roulement (2) dans l'espace creux (H), **caractérisé en ce que** l'au moins une griffe de raccordement (8 ; 12; 15) est réalisée afin d'être extraite par pression hors de l'espace creux (H) lors de l'enfichage du rail de roulement (2) par celle-ci à partir de son état détendu et de s'enfoncer lors du retrait du premier rail de roulement (2) par retour élastique dans celle-ci.

2. Elément de raccordement (1 ; 11) selon la revendication 1, **caractérisé en ce que** la griffe de raccordement (8 ; 12 ; 15) présente une lame (8a ; 12a ; 15a) élastique pénétrant dans le sens d'enfichage (E) en biais dans l'espace creux (H) vers l'intérieur.

3. Elément de raccordement (1 ; 11) selon l'une quelconque des revendications précédentes, **caractérisé en ce qu'**une extrémité avant pénétrant dans l'espace creux (H) de la griffe de raccordement (8 ; 12 ; 15) est réalisée comme moyens d'enfoncement (8b ; 12b ; 15b) dans le rail de roulement (2).

4. Elément de raccordement (1 ; 11) selon la revendication 3, **caractérisé en ce que** le moyen d'enfoncement est une arête de coupe (8b ; 15b) ou une pointe (12b).

5. Elément de raccordement (1 ; 11) selon la revendication 4, **caractérisé en ce que** le moyen d'enfoncement (8b; 12b) est coudé en direction du rail de roulement (2) à enficher dans l'espace creux.

6. Elément de raccordement (1 ; 11) selon l'une quelconque des revendications précédentes, **caractérisé en ce que** le dispositif de retenue présente une seconde griffe de raccordement (8' ; 12' ; 15') élastique, pénétrant dans l'état détendu en biais dans un sens d'enfichage (E') d'un second rail de roulement (2') dans l'espace creux (H').

7. Elément de raccordement (1 ; 11) selon l'une quelconque des revendications précédentes, **caractérisé en ce qu'**une première languette de délimitation d'enfichage (9' ; 13') élastique pénétrant dans l'autre espace creux (H') prévu pour le second rail de roulement (2') et disposée sur l'élément de raccordement (1 ; 11) est prévue pour la délimitation de l'enfichage du premier rail de roulement (2) dans son sens d'enfichage (E) dans l'espace creux (H) prévu pour celui-ci.

8. Elément de raccordement (1 ; 11) selon la revendication 7, **caractérisé en ce qu'**une arête de butée (10' ; 14') de la première languette de délimitation d'enfichage (9' ; 13') s'étend dans un plan perpendiculaire au sens d'enfichage (E) du premier rail de roulement (2).

9. Elément de raccordement (1 ; 11) selon la revendication 7 ou 8, **caractérisé en ce que** l'au moins une première languette de délimitation d'enfichage (9' ; 13') pénètre dans l'état détendu en biais dans l'espace creux (H') prévu pour le second rail de roulement (2') et est réalisée afin d'être extraite par pression lors de l'enfichage du second rail de roulement (2') par celle-ci hors de son espace creux (H').

10. Elément de raccordement (1 ; 11) selon l'une quelconque des revendications 7 à 9, **caractérisé en ce qu'**une seconde languette de délimitation d'enfichage (9 ; 13) élastique disposée sur l'élément de raccordement (1 ; 11) est prévue pour la délimitation de l'enfichage du second rail de roulement (2') dans son sens d'enfichage (E') dans l'espace creux (H') prévu pour celui-ci, laquelle languette pénètre dans l'état détendu en biais dans l'espace creux (H) prévu pour le premier rail de roulement (2) et est réalisée afin d'être extraite par pression lors de l'enfichage du premier rail de roulement (2) par celle-ci hors de son espace creux (H).

11. Elément de raccordement (1) selon l'une quelconque des revendications précédentes, **caractérisé en ce que** les griffes de raccordement (8, 8') et/ou les languettes de délimitation d'enfichage (9, 9') sont formées à partir d'une tôle élastique à ressorts (5) disposée dans un corps de raccordement (3) de l'élément de raccordement (1).

12. Elément de raccordement (1) selon la revendication 11, **caractérisé en ce que** la tôle élastique à ressorts (5) présente, pour la fixation sur le corps de raccordement (3), des languettes de fixation (6, 6', 7, 7') qui s'engagent dans des évidements correspondants du corps de raccordement (3).

13. Elément de raccordement (1 ; 11) selon l'une quelconque des revendications précédentes, **caractérisé en ce que** les griffes de raccordement (8, 8' ; 12, 12' ; 15) et/ou les languettes de délimitation d'enfichage (9, 9' ; 13, 13') et/ou les languettes de fixation (6, 6', 7, 7') et/ou la tôle élastique à ressorts (5) se composent d'un matériau plus dur que celui des rails de roulement (2, 2'), en particulier d'acier à ressorts.

14. Système de rails de roulement avec plusieurs rails de roulement (2, 2') pouvant être raccordés par des éléments de raccordement (1 ; 11), composés de profilés creux oblongs, dont un côté est interrompu dans le sens longitudinal, **caractérisé en ce que** les éléments de raccordement (1 ; 11) sont réalisés selon l'une quelconque des revendications précédentes.

15. Système de rails de roulement selon la revendication 14, **caractérisé en ce que** les rails de roulement (2, 2') se composent d'un matériau souple par rapport aux griffes de raccordement (8, 8' ; 12, 12' ; 15) de l'élément de raccordement (1 ; 11).
